# FASCICULE DE BREVET EUROPEEN

(11) **EP 3 734 421 B1**
(45) Date de publication et mention de la délivrance du brevet: **12.07.2023**
(21) Numéro de dépôt: 20155505.9
(22) Date de dépôt: 04.02.2020
(51) Int. Cl.: G06F 3/01

(54) **DISPOSITIF DE RÉALITÉ VIRTUELLE, AUGMENTÉE OU MIXTE**
GERÄT FÜR VIRTUELLE, ERWEITERTE ODER GEMISCHTE REALITÄT
DEVICE FOR VIRTUAL, AUGMENTED OR MIXED REALITY

(30) Priorité: 08.02.2019 FR 1901269
(43) Date de publication de la demande: 04.11.2020
(73) Titulaire: Commissariat à l'Energie Atomique et aux Energies Alternatives, 75015 Paris (FR)
(72) Inventeur: CASSET, Fabrice, 38054 GRENOBLE CEDEX 9 (FR); FANGET, Stéphane, 38054 GRENOBLE CEDEX 9 (FR); RASCLE, Angélique, 38054 GRENOBLE CEDEX 9 (FR)
(74) Mandataire: Cabinet Beaumont

(56) Documents cités:
- EP-A1- 2 945 044
- CN-A- 107 908 000

## Description

### Domaine technique

La présente description concerne un dispositif de réalité virtuelle, augmentée ou mixte.

### Technique antérieure

On a déjà proposé des dispositifs portatifs d'affichage en réalité virtuelle, augmentée ou mixte, de type lunettes ou masque, comprenant une monture destinée à être portée sur la tête d'un utilisateur et un écran d'affichage fixé à la monture destiné à être placé devant au moins un oeil de l'utilisateur, typiquement à quelques centimètres de l'oeil de l'utilisateur. L'écran permet d'afficher des images visibles par l'utilisateur. L'écran peut être opaque. On parle alors de dispositif d'affichage en réalité virtuelle dans la mesure où, du point de vue de l'utilisateur, les images affichées sur l'écran se substituent à la scène réelle située dans le champ de vision de l'utilisateur. De façon alternative, l'écran peut être partiellement transparent. On parle alors de dispositif d'affichage en réalité augmentée ou encore de dispositif de réalité mixte dans la mesure où, du point de vue de l'utilisateur, les images affichées sur l'écran se superposent et/ou sont en corrélation avec la scène réelle située dans le champ de vision de l'utilisateur.

On a par ailleurs déjà proposé des dispositifs d'interface utilisateur appelés dispositifs d'interface haptique, permettant de créer, pour l'utilisateur, une sensation de toucher d'un objet virtuel. On a notamment proposé un dispositif d'interface haptique comportant une matrice de transducteurs ultrasonores commandables individuellement pour générer des impulsions ultrasonores. Un circuit de contrôle commande les transducteurs en émission avec des déphasages entre les différents transducteurs choisis de façon à focaliser les ondes émises en un point choisi de l'espace, à distance de la matrice de transducteurs. Ceci permet de générer, au voisinage du point de focalisation choisi, une pression suffisamment forte pour être ressentie par l'utilisateur lorsque ce dernier place sa main au niveau du point visé. Différents points de focalisation peuvent être successivement balayés à une vitesse relativement élevée de façon à générer dans l'espace une distribution de pressions perceptibles par l'utilisateur, permettant de créer une sensation de toucher d'un objet virtuel.

Des systèmes combinant des dispositifs d'affichage en réalité virtuelle, augmentée ou mixte, et des dispositifs d'interface haptique ont également été proposés.

On a notamment proposé un système combinant un dispositif portatif d'affichage en réalité virtuelle, augmentée ou mixte, de type lunettes ou masque, avec un dispositif d'interface haptique à base de transducteurs ultrasonores du type décrit ci-dessus. Ceci permet de fournir à l'utilisateur à la fois une image optique et une sensation de toucher d'un objet virtuel. Toutefois, une limitation d'un tel système est que les dispositifs connus d'interface haptique à base de transducteurs ultrasonores sont des dispositifs fixes (non portatifs). Ainsi, pour pouvoir bénéficier des sensations haptiques, l'utilisateur doit placer sa main dans un volume fixe prédéfini, correspondant à l'ensemble des points de focalisation accessibles par la matrice de transducteurs ultrasonores.

Les documents CN107908000 et EP2945044 décrivent d'autres exemples de systèmes combinant des dispositifs d'affichage en réalité virtuelle avec des dispositifs d'interface haptique à base de transducteurs ultrasonores.

### Résumé de l'invention

Il existe un besoin pour un dispositif de réalité virtuelle, augmentée ou mixte, palliant tout ou partie des inconvénients des dispositifs connus.

En particulier, il existe un besoin pour un dispositif portatif de réalité virtuelle, augmentée ou mixte, combinant vision optique et sensations haptiques.

Ainsi, un mode de réalisation prévoit un dispositif portatif de réalité virtuelle, augmentée ou mixte, comportant :
- une monture destinée à être portée sur la tête d'un utilisateur ;
- un écran d'affichage fixé à la monture et destiné à être disposé devant un oeil de l'utilisateur ;
- une pluralité de transducteurs ultrasonores fixés à la monture ;
- un circuit de contrôle configuré pour commander l'écran d'affichage pour afficher des images, et les transducteurs ultrasonores pour générer, dans l'air, à distance de la monture, une distribution de pressions détectables par la main de l'utilisateur de façon à obtenir un effet haptique; et
- entre chaque transducteur et le visage de l'utilisateur, un élément en un matériau absorbant pour les ondes ultrasonores émises par le transducteur, ledit élément étant adapté à absorber au moins la moitié de la puissance ultrasonore émise par le transducteur en direction de la tête de l'utilisateur.

Selon un mode de réalisation, le dispositif comprend en outre un système de détection de la position de la main de l'utilisateur.

Selon un mode de réalisation, le circuit de contrôle est configuré pour lire des données de sortie du système de détection et modifier en conséquence la commande de l'écran d'affichage et des transducteurs ultrasonores.

Selon un mode de réalisation, le système de détection comprend une caméra ou un système à émission-réception d'infrarouges.

Selon un mode de réalisation, le système de détection comprend un ou plusieurs transducteurs ultrasonores de ladite pluralité de transducteurs ultrasonores.

Selon un mode de réalisation, les transducteurs ultrasonores sont des transducteurs piézoélectriques.

Selon un mode de réalisation, chaque transducteur comprend une membrane flexible suspendue sur un support rigide, et un élément de conversion piézoélectrique fixé sur la membrane flexible.

Selon un mode de réalisation, chaque transducteur ultrasonore est disposé dans une cavité formée dans la monture.

Selon un mode de réalisation, le circuit de contrôle est configuré pour commander l'émission d'impulsions ultrasonores par les transducteurs avec des déphasages entre les différents transducteurs choisis de façon à focaliser les ondes émises en un point choisi de l'espace.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue de face schématique d'un exemple d'un dispositif de réalité virtuelle, augmentée ou mixte, selon un mode de réalisation ;

la figure 2 est un schéma simplifié illustrant, sous forme de blocs fonctionnels, un exemple d'un dispositif de réalité virtuelle, augmentée ou mixte, selon un mode de réalisation ;

la figure 3 est une vue en coupe schématique et partielle illustrant un exemple de réalisation d'un transducteur ultrasonore du dispositif de la figure 1 ; et

la figure 4 est une vue en coupe schématique illustrant un exemple d'intégration de transducteurs ultrasonores dans le dispositif de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les utilisations qui peuvent être faites des dispositifs décrits n'ont pas été détaillées, les modes de réalisation décrits étant compatibles avec toutes les applications connues de réalité virtuelle, augmentée ou mixte, pouvant tirer profit d'un dispositif portatif combinant vision optique et sensations haptiques. De plus, la réalisation des différents éléments constitutifs des dispositifs décrits n'a pas été détaillée, la réalisation de ces éléments étant à la portée de l'homme du métier à partir des indications de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", "latéral", etc., il est fait référence, sauf précision contraire, à l'orientation des figures, étant entendu que, en pratique, les dispositifs décrits peuvent être orientés différemment.

Sauf précision contraire, les expressions "environ", "approximativement", "sensiblement", et "de l'ordre de" signifient à 10 % près, de préférence à 5 % près.

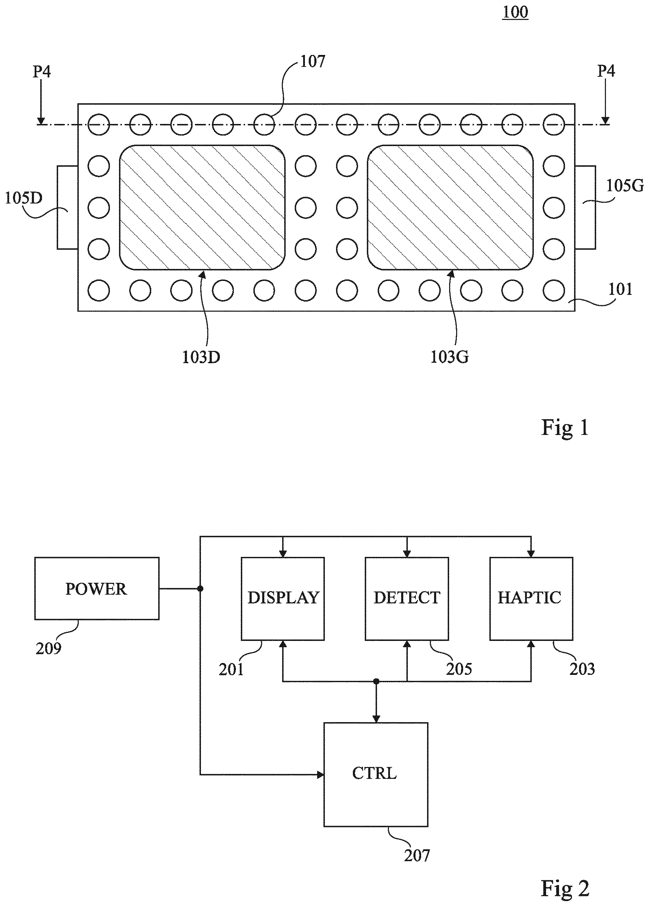

La figure 1 est une vue de face schématique d'un exemple d'un dispositif de réalité virtuelle, augmentée ou mixte, 100 selon un mode de réalisation.

Le dispositif 100 de la figure 1 est un dispositif de type lunettes, destiné à être porté sur la tête d'un utilisateur (non représenté). Le dispositif 100 comprend une monture 101 sur laquelle sont fixés deux écrans d'affichage 103G et 103D destinés à être positionnés respectivement devant l'oeil gauche et devant l'oeil droit de l'utilisateur, par exemple à une distance comprise entre 0,5 et 10 centimètres respectivement de l'oeil gauche et de l'oeil droit de l'utilisateur. Le dispositif 100 comprend en outre des branches 105G et 105D fixées aux bords de la monture respectivement du côté de l'écran 103G et du côté de l'écran 103D, permettant de maintenir le dispositif en place sur la tête de l'utilisateur.

Le dispositif 100 peut être un dispositif de réalité virtuelle. Dans ce cas, les écrans d'affichage 103G et 103D sont des écrans opaques ou occultants, bloquant la transmission, vers les yeux de l'utilisateur, des rayons lumineux visibles en provenance de la scène réelle située devant l'utilisateur. L'utilisateur ne voit alors que les images affichées par les écrans 103G et 103D.

A titre de variante, le dispositif 100 peut être un dispositif de réalité augmentée ou mixte. Dans ce cas, les écrans d'affichage 103G et 103D sont des écrans partiellement transparents, transmettant vers les yeux de l'utilisateur tout ou partie des rayons lumineux visibles en provenance de la scène réelle située devant l'utilisateur. L'utilisateur voit alors des images affichées par les écrans 103G et 103D en superposition de la scène réelle située dans son champ de vision.

Selon un aspect d'un mode de réalisation, le dispositif 100 comprend en outre une pluralité de transducteurs ultrasonores 107 fixés à la monture 101. Les transducteurs 107 sont par exemple tous identiques ou similaires. Dans l'exemple représenté, les transducteurs 107 sont régulièrement répartis tout autour des écrans d'affichage 103G et 103D du dispositif. Les modes de réalisation décrits ne se limitent toutefois pas à cet agencement particulier des transducteurs 107. A titre de variante, les transducteurs 107 peuvent être disposés en matrice en dessous ou au-dessus des écrans d'affichage 103G et 103D, entre les écrans d'affichage 103G et 103D, ou encore à gauche ou à droite des écrans d'affichage 103G et 103D. Les transducteurs 107 sont commandables individuellement pour générer des impulsions ultrasonores non audibles pour l'utilisateur, par exemple de fréquence comprise entre 20 kHz et 1 MHz.

Le dispositif 100 comprend en outre un circuit électronique de contrôle, non visible sur la figure 1, configuré pour commander l'émission d'impulsions ultrasonores par les transducteurs 107, avec des déphasages entre les différents transducteurs choisis de façon à focaliser les ondes émises en un point choisi de l'espace situé devant l'utilisateur, à distance de la monture 101, par exemple à portée de main ou de pied de l'utilisateur, par exemple à une distance comprise entre 0,1 et 2 mètres de la monture 101. Ceci permet de générer, au voisinage du point de focalisation choisi, une pression suffisamment forte pour être ressentie par l'utilisateur lorsque ce dernier place sa main au niveau du point visé. Différents points de focalisation peuvent être successivement balayés à une vitesse relativement élevée de façon à générer dans l'espace une distribution de pressions perceptibles par l'utilisateur, permettant de créer une sensation de toucher d'un objet virtuel.

Le circuit de contrôle est en outre configuré pour commander l'affichage d'images sur les écrans 103G et 103D.

Ceci permet de fournir à l'utilisateur à la fois une image optique, par exemple bidimensionnelle ou tridimensionnelle, et une sensation de toucher d'un objet virtuel.

Un avantage du dispositif 100 réside dans sa compacité et dans sa portabilité, liées au fait que les transducteurs ultrasonores 107 sont fixés sur la même monture portative 101 que les écrans d'affichage 103G et 103D. Ainsi, la vision et la sensation de toucher des objets virtuels sont permises quel que soit le lieu d'utilisation du dispositif. Autrement dit, il n'est pas nécessaire de définir au préalable une zone fixe dans laquelle un effet haptique peut être obtenu. Il en résulte une plus grande immersion de l'utilisateur dans l'environnement virtuel.

Un autre avantage du dispositif 100 est lié au fait que les écrans d'affichage 103G et 103D et les transducteurs ultrasonores 107 sont fixés sur une même monture 101 et sont donc solidaires mécaniquement. Autrement dit, la position relative des transducteurs ultrasonores 107 par rapport aux écrans d'affichage 103G et 103D est fixe. Il en résulte que l'alignement entre les objets virtuels optiques affichés par les écrans 103G et 103D et les objets virtuels haptiques générés par les transducteurs ultrasonores 107 est relativement aisé à réaliser.

Un autre avantage est lié au fait que, dans la mesure où les transducteurs ultrasonores 107 sont portés par l'utilisateur lui-même, la distance entre les transducteurs 107 et la zone de génération des objets virtuels haptiques peut être relativement faible. Ceci permet de limiter la puissance d'émission ultrasonore requise et donc la consommation électrique liée à la génération de l'effet haptique.

Le dispositif 100 peut en outre comprendre un système de détection, non visible sur la figure 1, adapté à détecter des éléments de l'environnement. A titre d'exemple, le système de détection est configuré pour détecter la position de la main de l'utilisateur de façon à détecter d'éventuelles interactions de l'utilisateur avec des objets virtuels générés par le dispositif, et modifier en conséquence les objets virtuels et/ou les effets haptiques générés.

Le système de détection peut comprendre une caméra, un dispositif de détection à émission/réception d'infrarouges, ou tout autre dispositif de détection adapté, fixé sur la monture 101 ou sur les branches 105G, 105D du dispositif.

Dans un mode de réalisation préféré, le système de détection utilise un ou plusieurs des transducteurs ultrasonores 107 pour détecter des éléments de l'environnement. A titre d'exemple, lors d'une phase de détection, certains transducteurs ultrasonores 107 peuvent être commandés pour générer un signal acoustique adapté à se réfléchir sur les mains de l'utilisateur, et d'autres transducteurs peuvent être activés en réception pour lire le signal acoustique réfléchi. Ainsi, la main de l'utilisateur peut être localisée et imagée par le dispositif. Les transducteurs utilisés pour la détection peuvent être les mêmes que ceux utilisés pour la génération de l'effet haptique. Dans ce cas, les phases de détection et les phases de génération d'un effet haptique peuvent être séquentielles. Alternativement, certains transducteurs 107 peuvent être dédiés à la détection de l'environnement et d'autres transducteurs 107 peuvent être dédiés à la génération d'effets haptiques, auquel cas les phases de détection et les phases de génération d'objets virtuels peuvent être simultanées.

La figure 2 est un schéma simplifié illustrant, sous forme de blocs fonctionnels, un exemple d'un dispositif de réalité virtuelle, augmentée ou mixte, selon un mode de réalisation.

Le dispositif de réalité virtuelle, augmentée ou mixte de la figure 2 comprend un dispositif d'affichage d'images 201 (DISPLAY), comprenant par exemple les écrans 103G et 103D du dispositif 100 de la figure 1. Le dispositif 201 peut comprendre un ou plusieurs micro-écrans matriciels, un ou plusieurs micro-projecteurs à balayage, ou tout autre dispositif adapté à afficher une image sur un écran placé à quelques centimètres d'un oeil de l'utilisateur.

Le dispositif de réalité virtuelle, augmentée ou mixte, de la figure 2 comprend en outre un dispositif de génération d'objets virtuels haptiques 203 (HAPTIC), comprenant par exemple l'ensemble des transducteurs 107 du dispositif 100 de la figure 1.

Dans l'exemple représenté, le dispositif de réalité virtuelle, augmentée ou mixte, de la figure 2 comprend de plus un dispositif de détection d'éléments de l'environnement 205 (DETECT). Le dispositif 205 comprend par exemple une caméra, un dispositif de détection à émission/réception d'infrarouges, ou des transducteurs ultrasonores.

Le dispositif de réalité virtuelle, augmentée ou mixte, de la figure 2 comprend de plus un circuit de contrôle 207 (CTRL) adapté à recevoir des informations en provenance du dispositif de détection 205 et à commander en conséquence le dispositif d'affichage d'images 201 et le dispositif de génération d'objets virtuels haptiques 203. Le circuit de contrôle 207 peut comprendre un microprocesseur. Le circuit de contrôle 207 peut être fixé sur la monture 101 ou sur les branches 105G, 105D du dispositif 100 de la figure 1. A titre de variante, le circuit de contrôle 207 peut faire partie d'un dispositif déporté, par exemple de type smartphone, adapté à communiquer à distance, par exemple par liaison radio, avec les dispositifs 201, 203 et 205.

Le dispositif de réalité virtuelle, augmentée ou mixte, de la figure 2 comprend de plus un dispositif d'alimentation 209 (POWER) pouvant comporter une batterie. Le dispositif 209 est adapté à fournir l'énergie électrique d'alimentation des différents blocs du dispositif de réalité virtuelle, augmentée ou mixte, et notamment les dispositifs 201, 203, 205 et 207. A titre d'exemple, dans le dispositif 100 de la figure 1, une batterie du dispositif d'alimentation 209 peut être fixée sur la monture 101 ou sur les branches 105G, 105D du dispositif 100 de la figure 1.

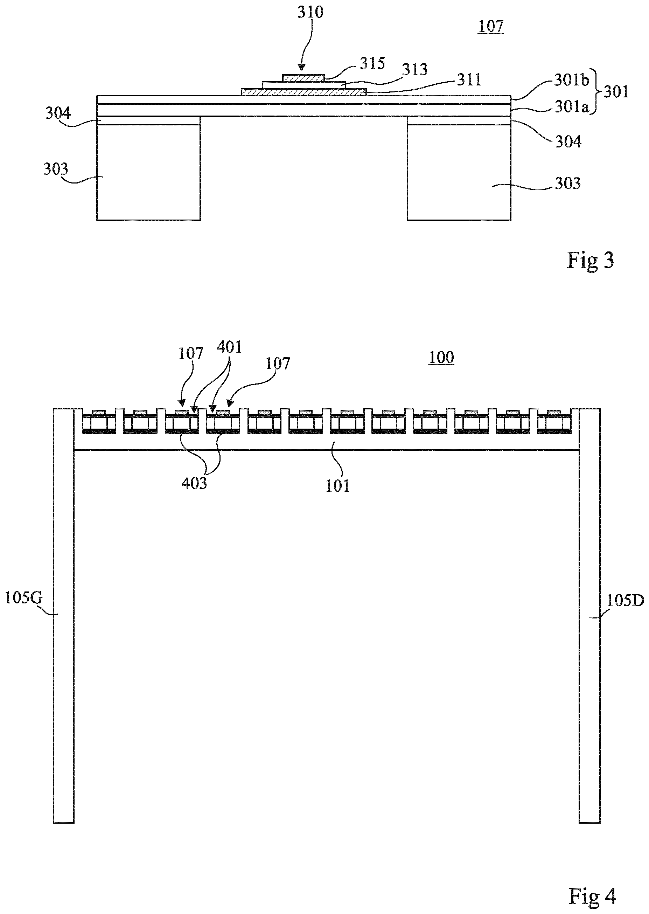

La figure 3 est une vue en coupe schématique et partielle illustrant un exemple de réalisation d'un transducteur ultrasonore 107 du dispositif de la figure 1.

Dans cet exemple, le transducteur 107 est un transducteur à membrane de type PMUT (de l'anglais "Piezoelectric Micromachined Ultrasonic Transducer" - transducteur piézoélectrique ultrasonore microusiné). Il comprend une membrane flexible 301 suspendue par sa périphérie sur un support rigide 303. Le support 303 est par exemple en silicium.

A titre d'exemple, le support 303 est constitué d'un cadre continu ou de plusieurs piliers disjoints. Dans une partie périphérique de la membrane 301, la membrane 301 est fixée, par sa face inférieure, sur la face supérieure du support 303. Dans l'exemple représenté, une couche isolante 304, par exemple en oxyde de silicium, fait interface entre la face supérieure du support 303 et la face inférieure de la membrane 301 dans les régions de fixation de la membrane 301 au support 303. Une partie centrale de la membrane 301 est quant à elle libre de se déplacer par rapport au support 303, dans une direction sensiblement orthogonale au plan de la membrane.

La membrane 301 peut être monocouche ou multicouches. L'épaisseur totale de la membrane est par exemple comprise entre 2 et 20 pm. Dans l'exemple représenté, la membrane 301 comprend deux couches 301a et 301b superposées. La couche inférieure 301a est par exemple en silicium polycristallin. La couche 301a présente par exemple une épaisseur comprise entre 2 et 8 µm, par exemple de l'ordre de 4 µm. La couche supérieure 301b est par exemple en oxyde de silicium. La couche 301b présente par exemple une épaisseur comprise entre 0,5 et 3 µm, par exemple de l'ordre de 1,9 pm. En vue de dessus, la membrane peut avoir une forme générale rectangulaire, par exemple carrée, ou circulaire. Les dimensions de la membrane 301 en vue de dessus peuvent être relativement importantes, par exemple de l'ordre de quelques millimètres. A titre d'exemple, la membrane 301 présente, en vue de dessus, une dimension maximale (diamètre, largeur ou longueur) comprise entre 1 et 15 millimètres.

Le transducteur 107 de la figure 3 comprend en outre un élément de conversion piézoélectrique 310 fixé sur la membrane 301, du côté de la face supérieure de la membrane 301 dans l'exemple représenté. Dans cet exemple, l'élément de conversion piézoélectrique 310 comprend une électrode inférieure 311 disposée sur et en contact avec la face supérieure de la membrane 301, une couche 313 en un matériau piézoélectrique disposée sur et en contact avec la face supérieure de l'électrode 311, et une électrode supérieure 315 disposée sur et en contact avec la face supérieure de la couche piézoélectrique 313.

La couche piézoélectrique 313 peut être en titano-zirconate de plomb (PZT), en nitrure d'aluminium (AlN), en oxyde de zinc (ZnO), ou en tout autre matériau piézoélectrique adapté.

Chacune des électrodes 311 et 315 peut être monocouche ou multicouches. A titre d'exemple, l'électrode inférieure 311 comprend une couche de platine en contact avec la face inférieure de la couche 313, et l'électrode supérieure 315 comprend un empilement (non détaillé sur la figure) d'une couche de ruthénium en contact avec la face supérieure de la couche piézoélectrique 313, et d'une couche d'or en contact avec la face supérieure de la couche de ruthénium.

L'application d'une tension entre les électrodes 311 et 315 génère un champ électrique dans la couche piézoélectrique 313, provoquant une déformation mécanique de la couche 313 (étirement ou contraction selon la polarité de la tension appliquée), et donc une déformation de la membrane 301. Cet effet de transduction électromécanique peut être utilisé pour générer une onde acoustique ultrasonore.

A l'inverse, l'application d'une déformation mécanique à la couche piézoélectrique 313 entraîne une variation du champ électrique et donc une accumulation de charges dans les électrodes 311 et 313 de l'élément de conversion piézoélectrique. Cet effet de transduction mécanoélectrique peut être utilisé pour mesurer un signal ultrasonore reçu par le transducteur.

Bien que, dans l'exemple de la figure 3, l'élément de conversion piézoélectrique 310 soit situé sensiblement au centre de la membrane 301, d'autres agencements peuvent être prévus. A titre de variante, l'élément de conversion piézoélectrique peut être situé dans une partie périphérique de la membrane. Dans une autre variante, le transducteur peut comprendre plusieurs éléments de conversion piézoélectrique fixés à la membrane. A titre d'exemple, le transducteur peut comporter deux éléments de conversion piézoélectrique disposés respectivement dans une partie centrale et dans une partie périphérique de la membrane.

La figure 4 est une vue en coupe schématique du dispositif 100 de la figure 1 selon le plan P4 de la figure 1, illustrant un exemple d'intégration des transducteurs ultrasonores 107 dans le dispositif 100.

Dans l'exemple de la figure 4, les transducteurs 107 sont situés dans des cavités 401 formées dans la monture 101, tout autour des écrans 103G, 103D. A titre d'exemple, chaque transducteur 107 forme une puce individuelle. Le dispositif comprend par exemple une cavité 401 par transducteur, et un unique transducteur par cavité. Les modes de réalisation décrits ne se limitent toutefois pas à ce cas particulier. Dans l'exemple représenté, chaque transducteur 107 a sa membrane tournée vers l'ouverture de la cavité 401 dans laquelle il est disposé. A titre de variante, les transducteurs peuvent avoir leurs membranes tournées vers le fond des cavités, les ondes ultrasonores étant alors émises à partir de la face arrière de chaque membrane.

Selon l'invention, pour éviter que des ondes de pression perceptibles par l'utilisateur ne soient transmises vers le visage de ce dernier, un élément 403 en un matériau absorbant pour les ondes émises par les transducteurs 107 est placé entre chaque transducteur 107 et le visage de l'utilisateur, par exemple au fond de chacune des cavités 401. Selon l'invention, chaque élément 403 est adapté à absorber au moins la moitié de la puissance ultrasonore émise en direction du visage de l'utilisateur par le transducteur 107 en vis-à-vis duquel il est placé.

Les connexions des transducteurs 107 au circuit de contrôle 207 (figure 2) et au bloc d'alimentation 209 (figure 2) peuvent être réalisées par des fils ou pistes conductrices disposés du côté de la face avant des transducteurs (c'est-à-dire la face opposée au visage de l'utilisateur). A titre de variante, les connexions aux électrodes 311 et 315 (figure 3) des transducteurs 107 peuvent être ramenées en face arrière des transducteurs par l'intermédiaire de vias conducteurs (non visibles sur les figures) traversant le support 303 (figure 3).

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, les modes de réalisation décrits ne se limitent pas à des dispositifs de réalité virtuelle, augmentée ou mixte, de type lunettes tels que décrits en relation avec les figures 1 et 4, mais peuvent s'appliquer plus généralement à tout dispositif portatif de réalité virtuelle, augmentée ou mixte, destiné à être porté sur la tête d'un utilisateur, par exemple un dispositif de type masque ou casque. On notera en particulier que les modes de réalisation décrits peuvent être appliqués à des dispositifs comportant un nombre d'écrans d'affichage différent de deux, par exemple un unique écran ou plus de deux écrans.

En outre, les modes de réalisation décrits ne sont pas limités à l'exemple de réalisation des transducteurs ultrasonores 107 décrit en relation avec la figure 3. Plus généralement, tout autre type de transducteur ultrasonore connu, piézoélectrique ou non, peut être utilisé.

De plus, bien que, dans les exemples décrits ci-dessus, les transducteurs ultrasonores 107 soient fixés directement à la monture 101, les modes de réalisation décrits ne se limitent pas à ce cas particulier. A titre de variante, les transducteurs 107 peuvent être fixés sur tout ou partie de la surface extérieure du ou des écrans d'affichage du dispositif. Les transducteurs 107 sont alors fixés indirectement sur la monture 101. Par exemple, dans le cas d'un dispositif de réalité virtuelle, des transducteurs ultrasonores 107 peuvent être fixés sur toute la surface extérieure (c'est-à-dire opposée aux yeux de l'utilisateur) de l'écran d'affichage. Dans le cas d'un dispositif de réalité mixte ou augmentée, c'est-à-dire comportant un ou plusieurs écrans d'affichage transparents, par exemple en verre, permettant à l'utilisateur non seulement de voir des images virtuelles générées par le circuit de contrôle, mais également de visualiser une scène réelle à travers l'écran, les transducteurs peuvent être intégrés directement dans l'écran (par exemple dans des cavités formées dans le verre de l'écran). Les transducteurs peuvent être disposés dans une partie périphérique de l'écran pour ne pas gêner la vision de la scène extérieure. A titre de variante, les transducteurs peuvent être réalisés en des matériaux transparents (le support 303 peut par exemple être en quartz ou en verre), auquel cas les transducteurs peuvent être placés sur sensiblement toute la surface de l'écran.

## Revendications

1. Dispositif (100) portatif de réalité virtuelle, augmentée ou mixte, comportant :
- une monture (101) destinée à être portée sur la tête d'un utilisateur ;
- un écran d'affichage (103G, 103D) fixé à la monture (101) et destiné à être disposé devant un oeil de l'utilisateur ;
- une pluralité de transducteurs ultrasonores (107) fixés à la monture (101) ;
- un circuit de contrôle (207) configuré pour commander l'écran d'affichage (103G, 103D) pour afficher des images, et les transducteurs ultrasonores (107) pour générer, dans l'air, à distance de la monture (101), une distribution de pressions détectables par la main de l'utilisateur de façon à obtenir un effet haptique,
le dispositif étant **caractérisé en ce qu'**il comporte, entre chaque transducteur (107) et le visage de l'utilisateur, un élément (403) en un matériau absorbant pour les ondes ultrasonores émises par le transducteur, ledit élément (403) étant adapté à absorber au moins la moitié de la puissance ultrasonore émise par le transducteur (107) en direction de la tête de l'utilisateur.

2. Dispositif (100) selon la revendication 1, comprenant en outre un système de détection (205) de la position de la main de l'utilisateur.

3. Dispositif (100) selon la revendication 2, dans lequel le circuit de contrôle (207) est configuré pour lire des données de sortie du système de détection (205) et modifier en conséquence la commande de l'écran d'affichage (103G, 103D) et des transducteurs ultrasonores (107).

4. Dispositif (100) selon la revendication 2 ou 3, dans lequel le système de détection (205) comprend une caméra ou un système à émission-réception d'infrarouges.

5. Dispositif (100) selon la revendication 2 ou 3, dans lequel le système de détection (205) comprend un ou plusieurs transducteurs ultrasonores (107) de ladite pluralité de transducteurs ultrasonores.

6. Dispositif (100) selon l'une quelconque des revendications 1 à 5, dans lequel les transducteurs ultrasonores (107) sont des transducteurs piézoélectriques.

7. Dispositif (100) selon la revendication 6, dans lequel chaque transducteur (107) comprend une membrane flexible (301) suspendue sur un support rigide (303), et un élément de conversion piézoélectrique (310) fixé sur la membrane flexible (301).

8. Dispositif (100) selon l'une quelconque des revendications 1 à 7, dans lequel chaque transducteur ultrasonore (107) est disposé dans une cavité (401) formée dans la monture (101) .

9. Dispositif (100) selon l'une quelconque des revendications 1 à 8, dans lequel le circuit de contrôle (207) est configuré pour commander l'émission d'impulsions ultrasonores par les transducteurs (107) avec des déphasages entre les différents transducteurs choisis de façon à focaliser les ondes émises en un point choisi de l'espace.

## Patentansprüche

1. Eine tragbare Vorrichtung für virtuelle, erweiterte oder gemischte Realität (100), die Folgendes aufweist:
- eine Halterung (101), die dazu bestimmt ist, auf dem Kopf eines Benutzers getragen zu werden;
- einen Anzeigeschirm (103G, 103D), der an der Halterung (101) befestigt und dazu bestimmt ist, vor einem der Augen des Benutzers angeordnet zu werden;
- eine Vielzahl von Ultraschallwandlern (107), die an der Halterung (101) angebracht sind; und
- eine Steuerschaltung (207), die konfiguriert ist zum Steuern des Anzeigeschirms (103G, 103D), um Bilder anzuzeigen, und des Ultraschallwandlers (107), um in der Luft in einem Abstand von der Halterung (101) eine Druckverteilung zu erzeugen, die von der Hand des Benutzers detektiert werden kann, um einen haptischen Effekt zu erzielen,
wobei die Vorrichtung **dadurch gekennzeichnet ist, dass** sie zwischen jedem Wandler (107) und dem Gesicht des Benutzers ein Element (403) aus einem Material aufweist, das die vom Wandler ausgesandten Ultraschallwellen absorbiert, wobei das Element (403) in der Lage ist, mindestens die Hälfte der vom Wandler zum Gesicht des Benutzers hin ausgesandten Ultraschallenergie zu absorbieren.

2. Die Vorrichtung (100) nach Anspruch 1 ferner aufweisend ein System (205) zum Detektieren der Position der Hand des Benutzers.

3. Vorrichtung (100) nach Anspruch 2, wobei die Steuerschaltung (207) konfiguriert ist zum Lesen von Ausgangsdaten des Detektionssystems (205) und demgemäß Modifizieren der Steuerung des Anzeigebildschirms (103G, 103D) und der Ultraschallwandler (107).

4. Vorrichtung (100) nach Anspruch 2 oder 3, wobei das Detektionssystem (205) eine Kamera oder ein Infrarot-Sende/Empfangssystem aufweist.

5. Vorrichtung (100) nach Anspruch 2 oder 3, wobei das Detektionssystem (205) einen oder mehrere Ultraschallwandler (107) aus der Vielzahl der Ultraschallwandler aufweist.

6. Vorrichtung (100) nach einem der Ansprüche 1 bis 5, wobei die Ultraschallwandler (107) piezoelektrische Wandler sind.

7. Vorrichtung (100) nach Anspruch 6, wobei jeder Wandler (107) eine flexible Membran (301) aufweist, die an einem starren Träger (303) aufgehängt ist, und ein piezoelektrisches Wandlerelement (310), das mit der flexiblen Membran (301) verbunden ist.

8. Vorrichtung (100) nach einem der Ansprüche 1 bis 7, wobei jeder Ultraschallwandler (107) in einem in der Halterung (101) ausgebildeten Hohlraum (401) angeordnet ist.

9. Vorrichtung (100) nach einem der Ansprüche 1 bis 8, wobei die Steuerschaltung (207) konfiguriert ist zum Steuern der Emission von Ultraschallimpulsen durch die Wandler (107) mit Phasenverschiebungen zwischen den verschiedenen Wandlern, die so gewählt werden, um die emittierten Wellen auf einen ausgewählten Punkt im Raum zu fokussieren.

## Claims

1. A portable virtual, augmented, or mixed reality device (100), comprising:
- a mount (101) intended to be worn on a user's head;
- a display screen (103G, 103D) attached to the mount (101) and intended to be arranged in front of one of the user's eyes;
- a plurality of ultrasound transducers (107) attached to the mount (101); and
- a control circuit (207) configured to control the display screen (103G, 103D) to display images, and the ultrasound transducers (107) to generate, in air, at a distance from the mount (101), a pressure distribution detectable by the user's hand to obtain a haptic effect, the device being **characterized in that** it comprises, between each transducer (107) and the user's face, an element (403) made of a material absorbing for the ultrasound waves emitted by the transducer, said element (403) being capable of absorbing at least half of the ultrasound power emitted by the transducer towards the user's face.

2. The device (100) of claim 1, further comprising a system (205) for detecting the position of the user's hand.

3. The device (100) of claim 2, wherein the control circuit (207) is configured to read output data of the detection system (205) and accordingly modify the control of the display screen (103G, 103D) and of the ultrasound transducers (107).

4. The device (100) of claim 2 or 3, wherein the detection system (205) comprises a camera or an infrared emission/reception system.

5. The device (100) of claim 2 or 3, wherein the detection system (205) comprises one or a plurality of ultrasound transducers (107) from said plurality of ultrasound transducers.

6. The device (100) of any of claims 1 to 5, wherein the ultrasound transducers (107) are piezoelectric transducers.

7. The device (100) of claim 6, wherein each transducer (107) comprises a flexible membrane (301) suspended on a rigid support (303), and a piezoelectric conversion element (310) bonded to the flexible membrane (301).

8. The device (100) of any of claims 1 to 7, wherein each ultrasound transducer (107) is arranged in a cavity (401) formed in the mount (101).

9. The device (100) of any of claims 1 to 8, wherein the control circuit (207) is configured to control the emission of ultrasound pulses by the transducers (107) with phase shifts between the different transducers selected to focus the emitted waves on a selected point in space.
